# FASCICULE DE BREVET EUROPEEN

(11) **EP 0 553 014 B1**
(45) Date de publication et mention de la délivrance du brevet: **05.03.1997**
(21) Numéro de dépôt: 93400106.6
(22) Date de dépôt: 18.01.1993
(51) Int. Cl.: H02G 5/06

(54) **Dispositif de connexion électrique de barres conductrices de canalisations électriques**
Elektrische Verbindungsvorrichtung von Leitungsschienen in Leitungsanlagen
Electrical connecting device of line bars in electrical ducts

(30) Priorité: 21.01.1992 FR 9200578
(43) Date de publication de la demande: 28.07.1993
(73) Titulaire: SCHNEIDER ELECTRIC SA, 92100 Boulogne Billancourt (FR)
(72) Inventeur: Jego, Gérard, F-21470 Brazey en Plaine (FR); Teinturier, Jean-Yves, F-21600 Longvic (FR); Thierry, Jean-Pierre, F-21560 Couternon (FR)
(74) Mandataire: Carias, Alain

(56) Documents cités:
- US-A- 3 339 009
- US-A- 3 376 377
- US-A- 3 462 541

## Description

La présente invention se rapporte à un dispositif de connexion électrique de barres conductrices de canalisations électriques, comprenant d'une part des patins d'éclissage conducteurs réunissant chacun les extrémités des barres et d'autre part des éléments isolants d'éclisse qui sont intercalés entre les barres de manière à les isoler, le serrage de l'empilage des éléments isolants intercalaires et des patins sur les extrémités de barres étant réalisé par l'intermédiaire d'un organe de serrage commun de type boulon qui les traverse, ces patins pouvant être retirés pour mettre en place des dérivations.

On connaît déjà des systèmes de distribution électrique formés par des éléments de conduits contenant des tronçons de barres conductrices rigides qui sont portées de manière isolante dans ces conduits et qui sont sensiblement de même longueur que ceux-ci.

On réunit les barres conductrices de deux tronçons adjacents au moyen d'un bloc de connexion constitué de patins conducteurs d'éclissage associés à des éléments isolants ou barrières isolantes assurant l'isolement entre phases. Le serrage de l'empilage des patins conducteurs et des éléments isolants sur les extrémités des barres est assuré par un boulon traversant l'empilage. La largeur des patins et des éléments isolants est adaptée au nombre de barres conductrices par phase. Selon le cas, il est possible de prévoir une barre par phase ou deux barres par phase ou trois barres par phase. Le brevet US 4 705 334 décrit un bloc de connexion du type ci-dessus.

Pour pouvoir installer une dérivation à la jonction de deux tronçons, il faut démonter complètement le bloc de connexion et monter un nouveau bloc de connexion pourvu des dérivations de courant. Les blocs de connexion connus ne permettent donc pas d'installer facilement des dérivations.

Dans le document US-A- 3 376 377, on décrit un dispositif de connexion de deux ensembles de barres électriques dans lequel les extrémités des barres sont empilées les unes sur les autres (ce qui conduit à un encombrement important) et séparées par des plaques d'espacement conductrices et isolantes. Ce dispositif prévoit un montage en dérivation en remplaçant les plaques conductrices par les conducteurs de dérivation. Les barres électriques et les plaques d'espacement sont retenues dans des gorges si bien qu'il est impossible de retirer ces plaques et de les remplacer par des plaques de dérivation sans dévisser le boulon et sans écarter les barres. par ailleurs ces plaques d'espacement sont réalisées d'une seule pièce et on doit l'enlever totalement si l'on veut mettre en place des plaques de dérivation.

La présente invention a pour but de fournir un bloc de connexion de barres conductrices permettant d'installer facilement des dérivations de courant, c'est à dire sans avoir à démonter complètement le bloc de connexion installé. Le montage d'une dérivation s'effectue facilement, après desserrage du boulon et enlèvement d'une partie de patin. Le bloc n'a pas un encombrement important et la liaison électrique reste assurée même après extraction d'une partie des patins. Le dispositif est adapté à un système de distribution comportant une, deux, trois (voire plus) barres conductrices par phase.

Le dispositif de connexion selon l'invention est caractérisé par le fait que les barres sont alignées bout à bout et que l'un au moins des patins conducteurs est constitué par au moins une partie séparable qui peut être enlevée et remplacée par la plage de sortie de dérivation.

Selon une caractéristique, le dispositif comporte des moyens d'accrochage pour réunir la partie de patin séparable ou la plage de sortie de dérivation au reste du dispositif.

Selon une caractéristique, les moyens d'accrochage sont montés sur des entretoises montées entre les éléments isolants de manière à être immobilisées par rapport audits éléments isolants.

Selon une autre caractéristique, chaque patin démontable comprend deux parties démontables latéralement.

Selon une autre caractéristique, chaque patin démontable comprend une partie centrale non démontable située entre les deux parties latérales démontables de manière à recevoir plus d'une barre par phase.

L'invention va maintenant être décrite avec plus de détails en se référant à des modes de réalisation donnés à titre d'exemples et représentés par les dessins annexés sur lesquels :
la figure 1 est une coupe longitudinale du dispositif de connexion selon l'invention ainsi que des conduits et des conducteurs rigides qu'il réunit ;
la figure 2 est une coupe transversale, selon II-II, du dispositif de la figure 1 représenté sans dérivation ;
La figure 3 est une coupe transversale, selon III-III, de la figure 1 qui montre le dispositif équipé de plages de sortie de dérivation et de moyens d'accrochage des patins conducteurs ;
La figure 4 est une coupe selon IV-IV de la figure 3 ;
La figure 5 est une coupe transversale, selon III-III, de la figure 1 qui montre le dispositif équipé de plages de sortie et d'une première variante des moyens d'accrochage des patins conducteurs ;
La figure 6 est une coupe selon VI-VI de la figure 5 ;
La figure 7 est une coupe transversale, selon III-III, de la figure 1 qui montre le dispositif équipé de plages de sortie et d'une troisième variante des moyens d'accrochage des patins conducteurs ;
La figure 8 est une coupe selon VIII-VIII de la figure 7 ;
La figure 9 est une coupe transversale, selon III-III, de la figure 1 montrant un mode de réalisation correspondant à deux (ou trois) barres conductrices par phase ;
La figure 10 est une coupe transversale de deux dispositifs de connexion.

En se référant aux dessins, le bloc de connexion selon l'invention est repéré 5 dans son ensemble. Il se monte entre deux sections de distribution 1 et 2 contenant des conducteurs repérés respectivement 3a, 3b, 3c, 3d et 4a, 4b, 4c. Ces conducteurs sont constitués par des barres ou des bandes dont les sections sont sensiblement rectangulaires ou autres (H, etc).

Ces barres conductrices sont isolées et sont disposées en empilage, à l'exception de leurs extrémités où s'opère une séparation physique permettant la liaison physique des barres entre elles.

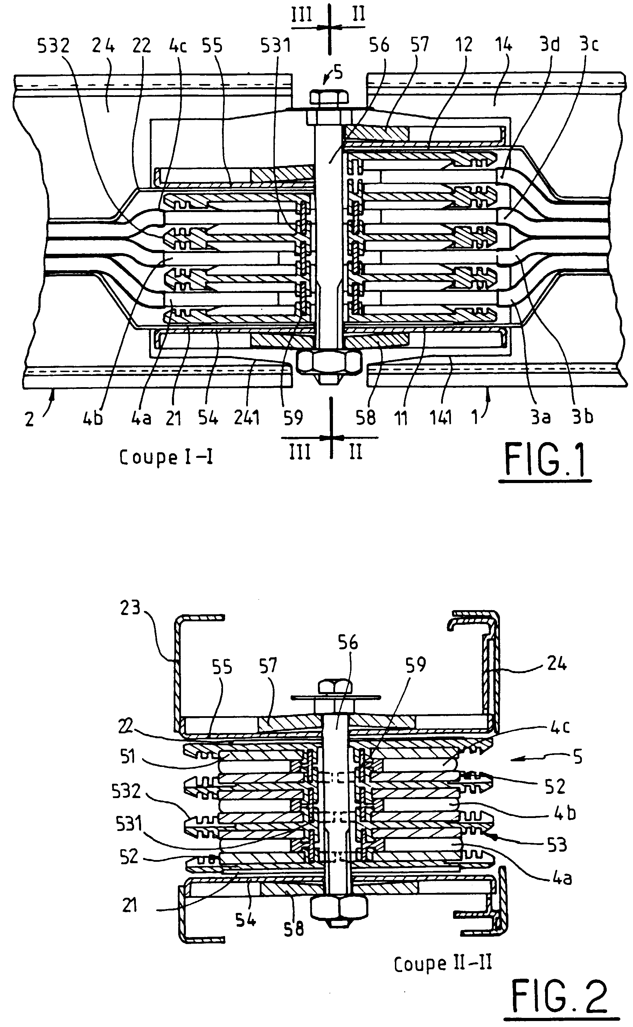

A titre indicatif, la figure 1 montre sur la partie droite un empilage formé de trois phases 3a, 3b, 3c et d'un neutre 3d et sur la partie gauche un empilage formé de trois phases 4a, 4b, 4c.

Les barres conductrices 3 et 4 sont enveloppées par un conducteur de terre qui comprend une bande inférieure, 11 et 21 respectivement, et une bande supérieure, 12 et 22 respectivement. Sur la longueur où les barres de phase sont accolées, les bandes (inférieure et supérieure) de terre sont rapprochées. Aux extrémités, les bandes (inférieure et supérieure) de terre s'écartent et se terminent par des plages de connexion.

Les barres conductrices sont portées par des rails latéraux 13 et 14.

La bande inférieure de terre 11 (ou 21), la bande supérieure de terre 12 (ou 22) et les deux rails latéraux 13 et 14 (ou 23 et 24) servent de logement aux barres conductrices.

Chaque rail latéral 13 ou 14 du support 1 présente à ses extrémités des découpes telles que 141 qui permettent le branchement de dérivations ainsi qu'il sera décrit plus loin. De même, les rails latéraux 23 et 24 du support adjacent 2 présentent, à leurs extrémités, des découpes telles que 241 qui coopèrent avec les découpes 141 déjà mentionnées.

Le bloc de connexion 5 sert à connecter deux sections alignées telles que les sections alignées 1 et 2 de la figure 1, avec une ou deux dérivations transversales ou encore une section telle que 1 avec une dérivation transversale.

Ce bloc de connexion comporte un couvercle inférieur 54 et un couvercle supérieur 55. Un boulon d'assemblage 56 traverse les deux couvercles. Des rondelles Belleville 57 et 58 coopèrent avec le boulon d'assemblage 56 pour assurer le serrage sous un couple déterminé.

La liaison électrique est assurée par des patins d'éclissage électrique 51 et 52 en forme de plaques qui connectent chacun les extrémités de deux barres conductrices 3a et 4a, etc..., alignées bout à bout. Ils sont réalisés en matériau conducteur de l'électricité. Les patins d'éclissage 51 sont situés au-dessus des barres conductrices et à leur contact, tandis que les patins d'éclissage 52 sont situés au-dessous des barres conductrices et à leur contact.

Les patins et les barres conductrices sont séparés et isolés par des éléments intercalaires 53 en forme de plaques et réalisés en matériau isolant électriquement. Chacun de ces éléments isolants 53 est intercalé entre les barres de deux phases différentes ou entre une phase et le neutre de manière à les isoler. L'élément isolant 53 supérieur porte, du côté inférieur, un patin 51 et est en contact, côté supérieur, avec la terre 12, 22. L'élément isolant 53 inférieur porte, du côté supérieur, un patin 52 et est en contact, côté inférieur, avec la terre 11, 21. Chacun des autres éléments isolants 53 porte, du côté supérieur, le patin 52 et, du côté inférieur, un patin 51. Le serrage de l'empilage formé des éléments isolants intercalaires 53 des patins 51 et 52 et des barres est réalisé par le boulon 56 qui traverse l'ensemble.

L'un des deux patins enserrant une barre conductrice est un patin démontable, tandis que l'autre patin est non-démontable. De préférence, le patin démontable, repéré 51, est situé au-dessus de la barre, tandis que le patin démontable, repéré 52, est situé au-dessous de la barre de manière à être porté par un élément isolant 53.

Chacun des patins démontables 52 comporte au moins une partie séparable 52b de manière que cette partie de patin 52b puisse être enlevée et remplacée par une plage de sortie de de dérivation 52c.

Dans les modes de réalisation des figures 1 à 8, chacun des patins inférieurs 52 est constitué de deux parties 52a et 52b. Chacune des deux parties 52a ou 52b est susceptible d'être enlevée et démontée pour être remplacée par une plage de sortie de dérivation telle que 52c. Chaque patin 52 dans son ensemble couvre une surface générale carrée, chacune des parties 52a, 52b constituante couvrant sensiblement une moitié de cette surface.

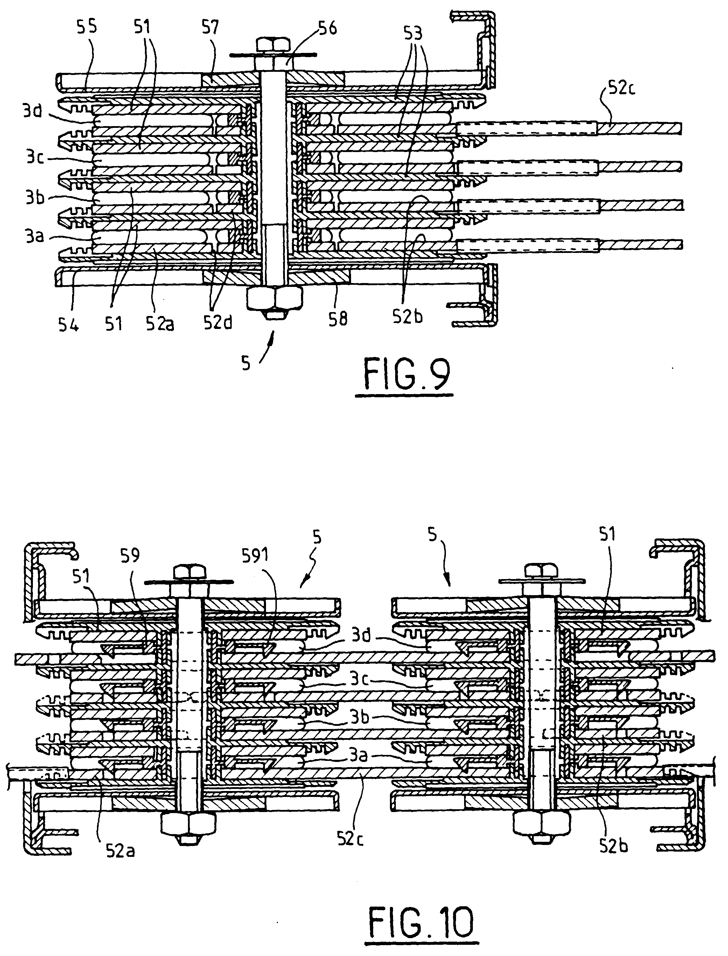

Dans le mode de réalisation de la figure 9, le patin inférieur 52 est constitué de trois parties, la partie centrale étant repérée 52d, les deux parties latérales étant repérées 52a et 52b. Le mode de réalisation de la figure 9 est adapté à un système de distribution comportant 2 barres par phase ou à un système de distribution comportant trois barres par phase.

Chaque élément intercalaire isolant 53 présente, sur au moins une face, un rebord annulaire central 531 de forme carrée bordant l'alésage central et servant à l'immobilisation en rotation et au maintien d'une entretoise 59. Il présente, par ailleurs, sur au moins une face, un rebord 532 bordant la périphérie extérieure et servant au maintien du patin 51 ou 52. Chaque élément intercalaire isolant supérieur ou inférieur présente des rebords 531 et 532 sur une seule face. Chaque élément intercalaire isolant situé entre ces deux éléments extrêmes présente des rebords 531 et 532 sur ses deux faces opposées. Chaque patin d'éclissage 51 ou 52 présente un alésage central ou une découpe centrale de manière à ce qu'il s'engage autour du rebord central 531 de l'élément intercalaire isolant 53 adjacent.

Chaque élément intercalaire isolant 53 présente, du côté du patin démontable, et sur les côtés latéraux (par rapport aux barres), des découpes 533 ménagées dans le rebord périphérique 531. Ces découpes permettent le démontage des patins séparables et le montage des plages de sortie pour les dérivations.

Les éléments intercalaires isolants 53 sont séparés deux à deux par des entretoises 59 portant des moyens de verrouillage 591 des patins d'éclissage séparables ou des plages de sortie. Chaque entretoise 59 est engagée dans les rainures des rebords centraux 531 de deux éléments intercalaires isolants 53 adjacents. Ces rainures et les tenons correspondants des entretoises ont des formes carrées assurant l'immobilisation en rotation.

Le dispositif'comporte des moyens de liaison pour maintenir les parties 52a, 52b, 52c de patin sur les éléments intercalaires isolants 53 sur lesquels ils reposent, ces moyens de liaison permettant le démontage.

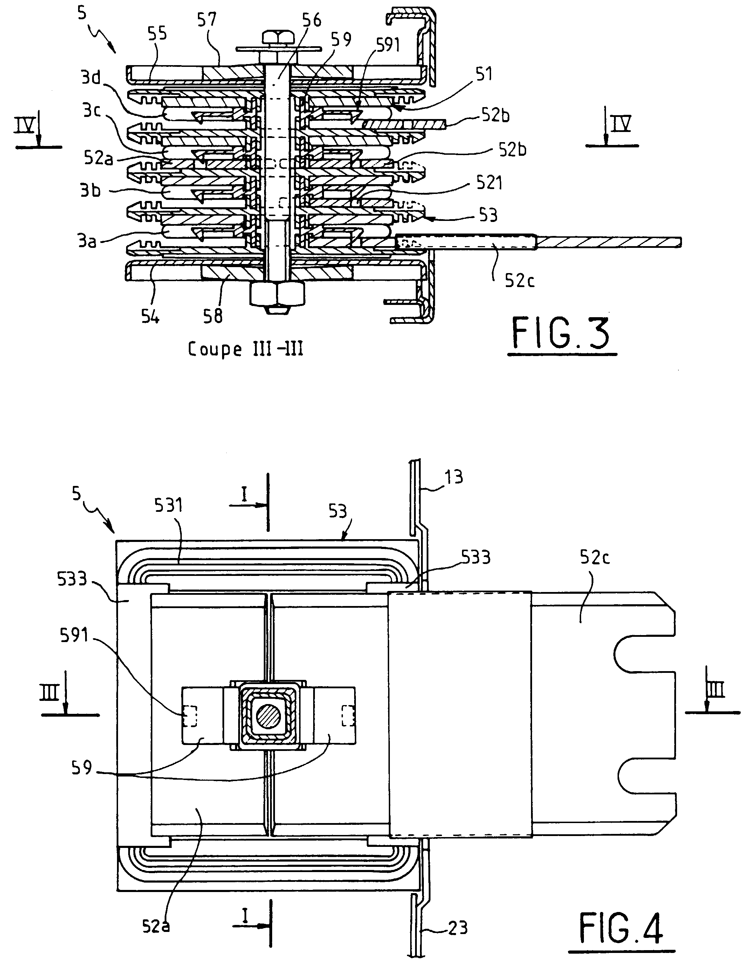

Dans le mode de réalisation des figures 3 et 4, les entretoises 59 portent des crochets 591 susceptibles de s'engager dans des encoches ou des trous d'accrochage 521 ménagés dans les patins d'éclissage 52a ou 52b ou dans les plages de sortie 52c de manière à les rendre solidaires des éléments isolants 53 adjacents. La figure 3 présente un patin 52b en cours de changement, au niveau supérieur, une plage de sortie 52c, au niveau inférieur, et des patins 52a encliquetés et en cours de démontage, aux niveaux intermédiaires.

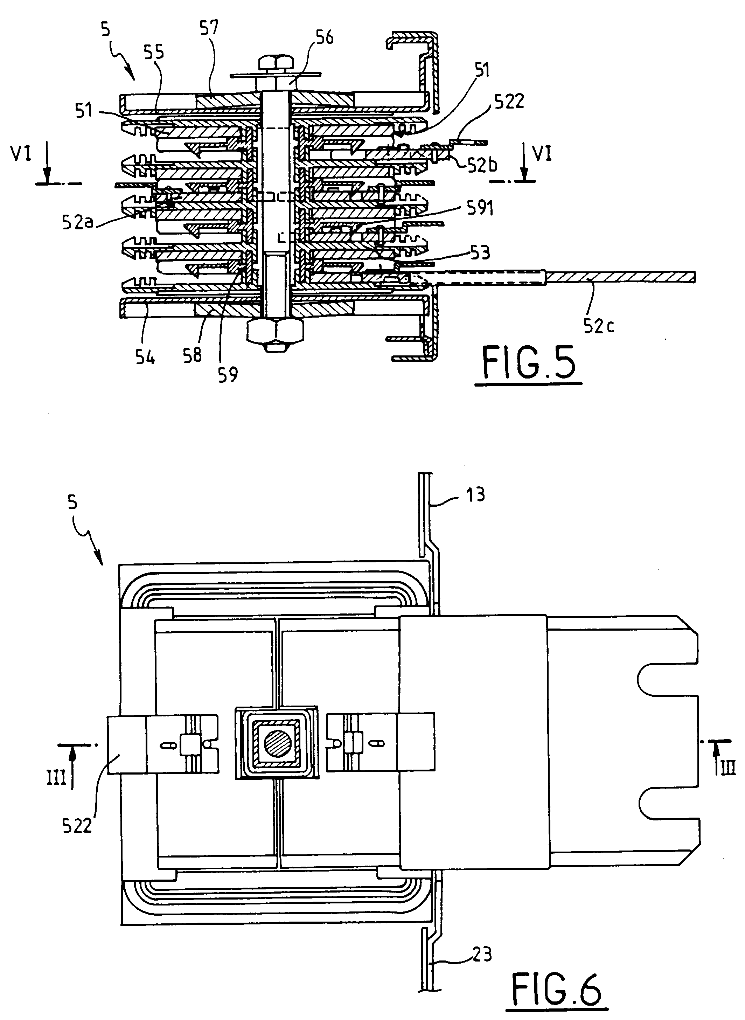

Dans le mode de réalisation des figures 5 et 6, les patins d'éclissage 52 portent des outils de déverrouillage 522 servant, par un mouvement de translation, à déverrouiller les crochets 591 des patins.

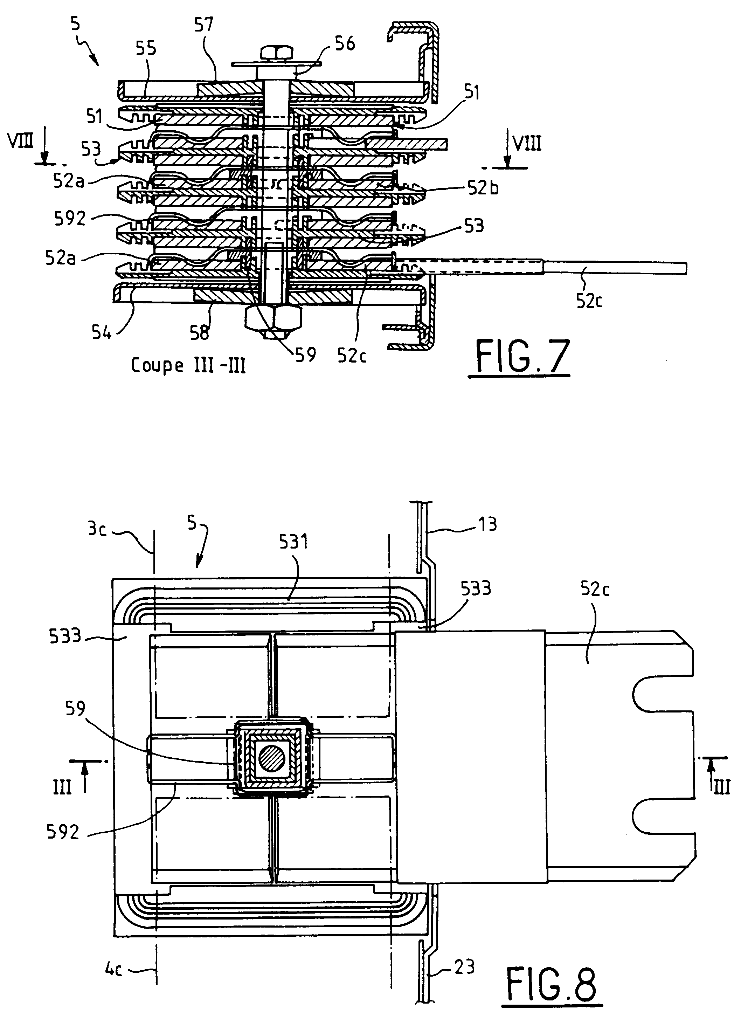

Dans le mode de réalisation des figures 7 et 8, les entretoises 59 portent des crochets 592 constitués chacun d'un fil plié.

Le mode de réalisation de la figure 9 est adapté à un système de distribution comportant deux ou trois barres par phase. Le patin 52 comprend une partie centrale fixe 52d, non démontable et des parties latérales démontables 52a et 52b. Chaque partie 52d, 52a, 52b est au contact d'une barre.

Le mode de réalisation de la figure 10 montre deux dispositifs de connexion 5 adjacents. Des parties de patins démontables 52c connectent les deux dispositifs. Une autre partie de patin démontable 52a ou 52b complète la partie de patin 52c.

## Revendications

1. Dispositif de connexion électrique de barres conductrices (4a, 4b, 4c et 3a, 3b, 3c, 3d) de canalisations électriques, comprenant d'une part des patins d'éclissage conducteurs (51, 52) réunissant chacun les extrémités des barres (4a, 3a,..) et d'autre part des éléments isolants d'éclisse (53) qui sont intercalés entre les barres de manière à les isoler, le serrage de l'empilage des éléments isolants intercalaires et des patins sur les extrémités de barres étant réalisé par l'intermédiaire d'un organe de serrage (56) commun de type boulon qui les traverse, ces patins pouvant être retirés pour mettre en place des dérivations, caractérisé par le fait que les barres (4a, 4b, 4c et 3a, 3b, 3c, 3d) sont alignées bout à bout et que l'un au moins des patins conducteurs (52) est constitué par au moins une partie séparable (52b) qui peut être enlevée et remplacée par la plage de sortie de dérivation (52c).

2. Dispositif selon la revendication 1, caractérisé par le fait qu'il comporte des moyens d'accrochage pour réunir la partie de patin (52a ou 52b) séparable ou la plage de sortie de dérivation (52c) au reste du dispositif.

3. Dispositif selon l'une quelconque des revendications précédentes, caractérisé par le fait que les moyens d'accrochage sont constituées par des crochets (591,592).

4. Dispositif selon l'une quelconque des revendications précédentes, caractérisé par le fait que les moyens d'accrochage sont montés sur des entretoises (59) montées entre les éléments isolants (53) de manière à être immobilisées par rapport audits éléments isolants.

5. Dispositif selon l'une quelconque des revendications précédentes, caractérisé par le fait que chaque patin démontable (52) comprend deux parties (52a et 52b) démontables latéralement.

6. Dispositif selon l'une quelconque des revendications précédentes, caractérisé par le fait que chaque patin démontable (52) comprend une partie (52d) centrale non démontable située entre les parties latérales (52a ,52b) démontables de manière à recevoir plus d'une barre par phase.

7. Dispositif selon l'une quelconque des revendications précédentes, caractérisé par le fait que chaque élément isolant (53) présente, du côté d'un patin démontable (52) , un rebord périphérique (532) associé à des découpes (533) pour le démontage et remontage.

## Patentansprüche

1. Elektrische Anschlußvorrichtung mit Leitschienen (4a, 4b, 4c und 3a, 3b, 3c und 3d) für elektrische Leitungssysteme, die einerseits leitende Verbindungsplatten (51, 52) enthalten, die jede die Enden der Schienen (4a, 3a, ...) verbinden und andererseits isolierende Verbindungsplatten (53), die zwischen die Schienen geschoben sind, um sie voneinander zu isolieren, wobei das Befestigen der Schichtung von zwischengeschobenen Isolierungselementen und den Platten an den Schienenenden durch ein gemeinsames Befestigungselement (56) vom Typ Bolzen ausgeführt wird, der durch sie hindurchgeht, wobei diese Platten abnehmbar sind, um Abzweigungen durchzuführen, gekennzeichnet dadurch, daß die Schienen (4a, 4b, 4c und 3a, 3b, 3c, 3d) Kopf and Kopf angeordnet sind und mindestens eine der Leitplatten (52) aus mindestens einem abnehmbaren Teil (52b) besteht, der abgenommen und durch eine Ausgangsschiene der Abzweigung (52c) ersetzt werden kann.

2. Vorrichtung gemäß Anspruch 1, gekennzeichnet dadurch, daß sie Befestigungsvorrichtungen enthält, um den abnehmbaren Teil der Platte (52a oder 52b) oder die Ausgangsschiene der Abzweigung (52c) mit dem Rest der Vorrichtung zu verbinden.

3. Vorrichtung gemäß den obigen Ansprüchen, gekennzeichnet dadurch, daß die Befestigungsvorrichtungen aus Haken (591, 592) bestehen.

4. Vorrichtung gemäß den obigen Ansprüchen, gekennzeichnet dadurch, daß die Befestigungselemente auf den Abstandshülsen (59) aufmontiert sind, die wiederum zwischen den Isolierelementen (53) montiert sind, um im Verhältnis zu den besagten Isolierelementen festgehalten zu werden.

5. Vorrichtung gemäß den obigen Ansprüchen, gekennzeichnet dadurch, daß jede abnehmbare Platte (52) zwei abnehmbare Seitenteile (52a und 52b) enthält.

6. Vorrichtung gemäß den obigen Ansprüchen, gekennzeichnet dadurch, daß jede abnehmbare Platte (52) einen nicht-abnehmbaren Mittelteil (52d) enthält, der zwischen den abnehmbaren Seitenteilen (52a, 52b) liegt, um mehr als eine Schiene pro Phase aufnehmen zu können.

7. Vorrichtung gemäß den obigen Ansprüchen, gekennzeichnet dadurch, daß jedes Isolierelement (53) an den abnehmbaren Platten (52) eine Peripherieleiste (532) enthält, die mit Ausschnitten (533) für Demontage und Wiedermontage verbunden ist.

## Claims

1. Electrical connection device of busbars (4a, 4b, 4c and 3a, 3b, 3c, 3d) of electrical wiring systems, comprising conductive fishplate pads (51, 52), each connecting the ends of the bars (4a, 3a, etc.), and insulating fishplate elements (53) which are inserted between the bars in such a way as to insulate them, the tightening of the stack of insert insulating elements and the pads on the bar ends being assured by means of a common bolt-type tightening member (56) which crosses them, it being possible to remove the pads in order to install tap-offs, characterized in that the bars (4a, 4b, 4c and 3a, 3b, 3c, 3d) are aligned end to end and in that at least one of the conductive pads (52) is constituted by at least one separable part (52b) which may be removed and replaced by the tap-off outlet (52c).

2. Device according to claim 1, characterized in that it includes means of locking in order to join the separable part of the pad (52a or 52b) or the tap-off outlet (52c) to the rest of the device.

3. Device according to either of the preceding claims, characterized in that the locking means are constituted by brackets (591, 592).

4. Device according to any of the preceding claims, characterized in that the locking means are fitted on spacers (59) placed between the insulating elements (53) in such a way as to be immobilized in relation to said insulating elements.

5. Device according to any of the preceding claims, characterized in that each removable pad (52) comprises two parts (52a and 52b) which may be removed laterally.

6. Device according to any of the preceding claims, characterized in that each removable pad (52) comprises a central non-removable part (52d) located between the removable lateral parts (52a, 52b) so that it may receive more than one bar per phase.

7. Device according to any of the preceding claims, characterized in that each insulating element (53) shows, on the side of a removable pad (52), a peripheral edge (532) associated with cuts (533) for removal and reassembly.
